(19) Europäisches Patentamt
European Patent Office
Office européen des brevets

(11) **EP 4 353 685 A1**

(12) **EUROPEAN PATENT APPLICATION**
published in accordance with Art. 153(4) EPC

(43) Date of publication:
**17.04.2024 Bulletin 2024/16**

(51) International Patent Classification (IPC):
*C01G 23/047* (2006.01)   *C08K 3/22* (2006.01)
*C08L 101/00* (2006.01)   *H01B 3/12* (2006.01)

(21) Application number: **22811213.2**

(22) Date of filing: **18.05.2022**

(52) Cooperative Patent Classification (CPC):
**C01G 23/047; C08K 3/22; C08L 101/00; H01B 3/12**

(86) International application number:
**PCT/JP2022/020633**

(87) International publication number:
**WO 2022/249941 (01.12.2022 Gazette 2022/48)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **24.05.2021 JP 2021086673**

(71) Applicant: **Denka Company Limited
Tokyo 103-8338 (JP)**

(72) Inventors:
• **OKABE, Takuto
Tokyo 103-8338 (JP)**
• **FUKAZAWA, Motoharu
Tokyo 103-8338 (JP)**

(74) Representative: **Murgitroyd & Company
165-169 Scotland Street
Glasgow G5 8PL (GB)**

(54) **INORGANIC OXIDE POWDER, METHOD FOR PRODUCING SAME, AND RESIN COMPOSITION**

(57)    To provide: an inorganic oxide powder which, when filled in a resin material, can simultaneously achieve a high dielectric constant and a low dielectric dissipation factor; a method for producing the same; and a resin composition comprising the inorganic oxide powder.

Provided is an inorganic oxide powder comprising a spherical titanium oxide powder and an aluminum oxide powder, wherein the aluminum content in the inorganic oxide powder is 20-50,000 mass ppm. Further provided is a resin composition comprising the inorganic oxide powder and at least one resin material selected from a thermoplastic resin and a thermosetting resin.

**EP 4 353 685 A1**

Description

TECHNICAL FIELD

The present invention relates to an inorganic oxide powder, a method for producing the same, and a resin composition comprising the inorganic oxide powder.

BACKGROUND

In recent years, accompanying an increase in information communication volumes in the communications field, the application of high-frequency band signals in electronic instruments and communication instruments, etc., has become more widespread. Meanwhile, applying high-frequency band signals in the foregoing instruments has also given rise to a problem of circuit signal transmission losses becoming large. Due thereto, with regard to materials to be used in high-frequency band devices, materials having a low dielectric dissipation factor are sought. Furthermore, as related electronic materials and members become more sophisticated, there is also a demand for devices to be made even smaller. When the relative dielectric constant of an antenna material incorporated in a communication instrument becomes high, it is possible to achieve further miniaturization of the communication instrument. Due thereto, with regard to ceramic fillers (inorganic oxide fillers) used in antenna materials, etc., too, materials having a high dielectric constant and a low dielectric dissipation factor are sought (see, for example, Patent Document 1, etc.). Dielectric properties of a GHz-band ceramic material are disclosed in Patent Document 1, etc., but are all properties of the ceramic material as a sintered substrate.
Titanium oxide powder is known as a highly versatile ceramic filler having a relatively high dielectric constant. Titanium oxide powder is generally synthesized by a gas phase method (see, for example, Patent Document 2) or a wet method (see, for example, Patent Document 3), etc. In a gas phase method, a titanium oxide powder having a small average particle diameter is obtained and the specific surface area becomes large easily. Note that when the specific surface area is large, there is a concern of the dielectric dissipation factor deteriorating due to adsorbed water or hydroxyl groups in a filler surface. Further, in the case of a wet method, the water content ratio of the obtained titanium oxide powder easily becomes high, and thus, the dielectric dissipation factor deteriorates easily.
Since ceramic fillers are often used by being filled in a resin material, from the perspective of improving dispersibility in a resin material and stabilizing dielectric properties, it is desirable for the shape of the ceramic fillers to be closer to spherical. Known synthesis methods by which it is easy to obtain a titanium oxide powder having a spherical shape and a specific surface area that is easily adjusted include a flame fusion method and a thermal plasma method (see, for example, Patent Documents 4 and 5). However, spherical titanium oxide powders obtained by these methods have a problem in that the dielectric properties thereof are not stable.

Patent Document 1: JP 2021-27386 A

Patent Document 2: JP H6-340423 A

Patent Document 3: JP 2005-53707 A

Patent Document 4: JP 4155750 B

Patent Document 5: JP 2012-246203 A

Non-Patent Document 1: International Materials Reviews, Vol. 60, No. 70, Supplementary data (2015)

SUMMARY OF INVENTION

Thus, the objective of the present invention is to provide: an inorganic oxide powder which, when filled in a resin material, can simultaneously achieve a high dielectric constant and a low dielectric dissipation factor; a method for producing the same; and a resin composition comprising the inorganic oxide powder.
As a result of diligent investigation, the present inventors discovered, to their surprise, that by using an inorganic oxide powder in which an aluminum oxide powder is combined with a spherical titanium oxide powder and setting the aluminum content in the inorganic oxide powder so as to be a certain range, it is possible to obtain an inorganic oxide powder which, when blended in a resin material, can simultaneously achieve a high dielectric constant and a low dielectric dissipation factor, leading to the completion of the present invention.
That is, the present invention has the following aspects.

[1] An inorganic oxide powder comprising a spherical titanium oxide powder and an aluminum oxide powder, wherein the aluminum content in the inorganic oxide powder is 20-50,000 mass ppm.

[2] The inorganic oxide powder described in [1], wherein the inorganic oxide powder has an average circularity of 0.80 or more.

[3] The inorganic oxide powder described in [1] or [2], wherein the inorganic oxide powder has an average particle diameter of 0.5-40 μm.

[4] The inorganic oxide powder described in any of [1] to [3], wherein the inorganic oxide powder has a specific surface area of 5 $m^2$/g or less.

[5] The inorganic oxide powder described in any of [1] to [4], wherein the ratio of the spherical titanium oxide powder is 90 mass% or more with respect to the total mass of the inorganic oxide powder.

[6] The inorganic oxide powder described in any of [1] to [5], wherein the inorganic oxide powder is surface-treated with a surface treatment agent.

[7] The inorganic oxide powder described in any of [1] to [6], wherein the inorganic oxide powder is for a resin material filler.

[8] A resin composition comprising the inorganic oxide powder described in any one of [1] to [7] and at least one resin material selected from a thermoplastic resin and a thermosetting resin.

[9] A method for producing the inorganic oxide powder described in any of [1] to [7], wherein the method comprises: spheroidizing a titanium oxide powder by a powder melting method; adding an aluminum source to the spheroidized titanium oxide powder; and heat-treating a raw material powder comprising the aluminum source and the spherical titanium oxide powder.

According to the present invention, it is possible to provide: an inorganic oxide powder which, when filled in a resin material, can simultaneously achieve a high dielectric constant and a low dielectric dissipation factor; a method for producing the same; and a resin composition comprising the inorganic oxide powder.

**DESCRIPTION OF EMBODIMENTS**

One embodiment of the present invention shall be explained in more detail below, but the present invention is not limited to the following embodiments. Note that herein, "-" with regard to numerical ranges means "... or more and ... or less". For example, "3-15" means three or more and 15 or less.

[Inorganic oxide powder]

An inorganic oxide powder according to the present embodiment is an inorganic oxide powder comprising a spherical titanium oxide powder and an aluminum oxide powder, characterized in that the aluminum content in the inorganic oxide powder is 20-50,000 mass ppm. The inorganic oxide powder according to the present embodiment, when filled in a resin material constituting a substrate, can simultaneously achieve a high dielectric constant and a low dielectric dissipation factor.

The aluminum content in the inorganic oxide powder according to the present embodiment is 20-50,000 mass ppm, preferably 20-40,000 mass ppm, more preferably 40-40,000 mass ppm, and even more preferably 400-40,000 mass ppm. If the aluminum content in the inorganic oxide powder is 20 mass ppm or more, a dielectric dissipation factor reduction effect increases. Further, if the aluminum content in the inorganic oxide powder is 50,000 mass ppm or less, a high dielectric constant can be achieved. Note that herein, the aluminum content in the inorganic oxide powder can be measured, in accordance with the specifications of JIS R 9301-3-4 and JIS 0116, under the following conditions.

<Method for measuring aluminum content in inorganic oxide powder>

0.1 g of the inorganic oxide powder is put in a Teflon® container, 2 mL of 6M sulfuric acid is added, and the Teflon container is sealed and then heated for 16 hours in a dryer adjusted to 230°C. After cooling, the decomposed solution is rendered to a volume of 10 mL with pure water to obtain a test solution. The test solution is diluted with dilute sulfuric acid as needed. Thereafter, a measurement sample is analyzed using ICP optical emission spectroscopy (ICP optical emission spectrometer: for example, manufactured by Agilent Technologies, Inc., product name: 5110 VDV,) and the aluminum content in the inorganic powder is measured. The measurement wavelength is set at 396.152 nm. Note that a calibration curve is created using the following reference solutions.

6.0 g of titanium (purity 99.9% or more) is heated and dissolved with 50 mL of 6M hydrochloric acid and thereafter rendered to 100 mL to prepare a titanium solution. An aluminum reference solution (Al 1000, manufactured by Fujifilm Wako Pure Chemical Corporation) is divided among 10 mL centrifuge tubes so as to obtain 0 mg/L, 0.1 mg/L, 1.0 mg/L, and 10 mg/L, then 2 mL of 6M sulfuric acid and 1 mL of the titanium solution are added and volumes are rendered constant to obtain calibration curve reference solutions.

The inorganic oxide powder according to the present embodiment comprises a spherical titanium oxide powder and an aluminum oxide powder. The ratio of the spherical titanium oxide powder in the inorganic oxide powder is preferably 90 mass% or more, more preferably 90-99.998 mass%, and even more preferably 95-99.998 mass% with respect to the total mass of the inorganic oxide powder. If the ratio of the spherical titanium oxide powder is 90 mass% or more, when filled in a resin material, it becomes easier to simultaneously achieve a high dielectric constant and a low dielectric dissipation factor. Note that "spherical titanium oxide powder" means a titanium oxide powder which, when observed with a microscope, or the like, has a projected view with a shape close to spherical. Further, the average circularity of the spherical titanium oxide powder is preferably 0.80 or more and more preferably 0.90 or more. The average circularity of the spherical titanium oxide powder can be calculated by the same method as that used for the inorganic oxide powder described later.

Further, the ratio of the aluminum oxide powder in the inorganic oxide powder can be arbitrarily adjusted in a range in which the aluminum content in the inorganic oxide powder is 20-50,000 mass ppm. In one embodiment, the ratio of the aluminum oxide powder in the inorganic oxide powder may be 10 mass% or less and may be 5 mass% or less with respect to the total mass of the inorganic oxide powder. Note that herein, "aluminum oxide" indicates a composition comprising aluminum oxide (alumina), the composition comprising mainly aluminum and oxygen, wherein the composition ratios thereof may be arbitrary and the aluminum is oxidized. Note that the aluminum oxide may be monocrystalline, polycrystalline, or amorphous, or may be a mixture thereof.

The average circularity of the inorganic oxide powder according to the present embodiment is preferably 0.80 or more, preferably 0.85 or more, and even more preferably 0.90 or more. Due to the average circularity of the inorganic oxide powder being 0.80 or more, when the inorganic oxide powder is mixed with a resin material, dispersibility in the resin material is likely to improve and dielectric properties are likely to be stable. Further, since resin viscosity increases, it becomes easier to prevent fluidity from decreasing, and workability and filling properties do not readily deteriorate. Furthermore, it becomes easy to prevent dielectric properties from decreasing due to the specific surface area becoming too large. Note that "dielectric properties are stable" indicates that there is little variation, among measurement locations, in the values of the dielectric constant and dielectric dissipation factor of the resin composition. Further, "average circularity" indicates a value calculated by the following method.

(Average circularity)

After fixing the inorganic oxide powder with carbon tape, an osmium coating is applied. Thereafter, an image of the powder is captured at a magnification of 500-50,000 using a scanning electron microscope (manufactured by JEOL Ltd., product name: JSM-7001F SHL), a projected area (S) and a projected perimeter (L) of a particle constituting the powder are calculated using an image analysis device (for example, manufactured by Nippon Roper K. K., product name: Image-Pro Premier Ver. 9.3), and then the circularity of the particle is calculated from formula (1) below. Circularities are calculated for 200 arbitrary particles and the average value thereof is used as the average circularity of the inorganic oxide powder.

$$\text{Circularity} = 4\pi S/L^2 \qquad (1)$$

The specific surface area of the inorganic oxide powder is preferably 5 $m^2$/g or less, more preferably 4 $m^2$/g or less, and even more preferably 3 $m^2$/g or less. If the specific surface area of the inorganic oxide powder is 5 $m^2$/g or less, it is easy to achieve a lower dielectric dissipation factor. Note that from the perspective of filling properties in a resin material, the lower limit of the specific surface area of the inorganic oxide powder is preferably no less than 0.1 $m^2$/g. That is, the specific surface area of the inorganic oxide powder according to the present embodiment may be 0.1-5 $m^2$/g. Note that the specific surface area of the inorganic oxide powder indicates a value measured according to the single point BET method by using a fully automated specific surface area and diameter measuring device.

The average particle diameter of the inorganic oxide powder is preferably 0.5-40 $\mu$m, more preferably 1-30 $\mu$m, and even more preferably 1-20 $\mu$m. If the average particle diameter of the inorganic oxide powder is within the above range, filling properties in a resin material are likely to be better and it is easy to adjust the dielectric constant and dielectric dissipation factor values of the resin composition. Note that the average particle diameter of the inorganic oxide powder indicates a particle diameter corresponding to a cumulative value of 50% in a volume-based cumulative particle size distribution measured by using a laser diffraction particle size distribution measuring device. The cumulative particle size distribution is represented by a distribution curve with the horizontal axis being the particle diameter ($\mu$m) and the vertical axis being the cumulative value (%).

The spherical titanium oxide powder included in the inorganic oxide powder according to the present embodiment preferably has a rutile phase as a crystalline phase. By including a spherical titanium oxide powder having a rutile phase, the obtained inorganic oxide powder is likely to realize a higher dielectric constant. In the case of including a spherical titanium oxide powder having a rutile phase, the ratio of the spherical titanium oxide powder having a rutile phase in the inorganic oxide powder according to the present embodiment may be 90 mass% or more, may be 95 mass% or more, and may be 98 mass% or more. Note that the "ratio of the spherical titanium oxide powder having a rutile phase in the inorganic oxide powder" means the ratio of the spherical titanium oxide powder having a rutile phase with respect to all crystalline phases (including amorphous phases) included in the inorganic oxide powder. Identification of crystalline phases in the inorganic oxide powder and the ratios of each crystalline phase can be determined by X-ray powder diffraction measurement/Rietveld analysis.

The inorganic oxide powder according to the present embodiment may be surface-treated with a surface treatment agent. Examples of the surface treatment agent include silane coupling agents, titanate coupling agents, aluminate coupling agents, and the like. The foregoing may be used alone or as a combination of two or more. By being surface-treated, filling properties in a resin material are likely to be better. When surface-treated with a surface treatment agent, the entire surface of the inorganic oxide powder may be subjected to a modifying treatment or a portion of the surface may be subjected to a modifying treatment.

The inorganic oxide powder according to the present embodiment may comprise a spherical titanium oxide powder and another inorganic oxide powder other than an aluminum oxide powder. Examples of the other inorganic oxide powder include silica powder, magnesium oxide powder, zirconium oxide powder, strontium titanate powder, barium titanate powder, and the like. The ratio of the other inorganic oxide powder is preferably 5 mass% or less with respect to the total mass of the inorganic oxide powder according to the present embodiment. Note that from the viewpoint that it is easy to obtain an inorganic oxide powder that can simultaneously achieve a high dielectric constant and a low dielectric dissipation factor, the inorganic oxide powder according to the present embodiment is preferably configured substantially only from a spherical titanium oxide powder and an aluminum oxide powder. That is, the ratio of the other inorganic oxide powder in the inorganic oxide powder according to the present embodiment is preferably less than 0.1 mass%.

Further, the inorganic oxide powder according to the present embodiment may be a mixture of inorganic oxide powders having different specific surface areas, average particle diameters, etc.

[Method for producing inorganic oxide powder]

Next, a method for producing the inorganic oxide powder according to the present embodiment will be described.

The method for producing the inorganic oxide powder according to the present embodiment comprises: spheroidizing a titanium oxide powder by a powder melting method (step (i)); adding an aluminum source to the spheroidized titanium oxide powder (step (ii)); and heat-treating a raw material powder comprising the aluminum source and the spherical titanium oxide powder (step (iii)). By such a production method, it is possible to obtain an inorganic oxide powder which comprises a spherical titanium oxide powder and an aluminum oxide powder and which has an aluminum content in the inorganic oxide powder of 20-50,000 mass ppm.

<Step (i)>

The method for producing the inorganic oxide powder according to the present embodiment comprises spheroidizing a titanium oxide powder by a powder melting method (hereinafter described as a "spheroidization step").

As a raw material titanium oxide powder (hereinafter described simply as the "titanium oxide powder"), it is preferable to use a titanium oxide powder having an average particle diameter of 0.5-40 $\mu$m. Further, the average circularity of the titanium oxide powder is not particularly limited. With such a titanium oxide powder, it is possible to reduce the moisture content more easily in the later step of heat-treating the raw material powder (powder comprising the spherical titanium oxide and the aluminum source). Due thereto, as the titanium oxide powder, a powder obtained by a wet method or a powder obtained by granulating a fine-particle titanium oxide powder may be used as a raw material as long as the powder has the average particle diameter described above. Note that the average particle diameter of the titanium oxide powder can be calculated by the same method as that used for the inorganic oxide powder described above.

From the perspectives of dielectric dissipation factor reduction and electronic material reliability, the titanium oxide powder preferably has a low content of impurities such as alkali metals such as Li, Na, and K, and metal elements such as Fe, and anions such as $Cl^-$ and $Br^-$. Specifically, the total amount of the foregoing impurities and anions in the raw material titanium oxide powder is preferably 0.01 mass% or less.

Further, the titanium oxide powder may also comprise aluminum. When using a titanium oxide powder comprising aluminum, in the subsequent step (ii), it is preferable to adjust the added amount of the aluminum source so that the aluminum content in the inorganic oxide powder is 20-50,000 mass ppm. That is, the aluminum content in the inorganic oxide powder according to the present embodiment may be the total amount of the aluminum content derived from the raw material titanium oxide powder and the aluminum content derived from the aluminum source added in the subsequent step (ii).

Step (i) is a step in which a titanium oxide powder is spheroidized by a powder melting method. The powder melting method is a method in which the titanium oxide powder is spheroidized at high temperature conditions above the melting point thereof, for example, by being introduced to a flame, a plasma, an electric furnace, a gas furnace, or the like, and it is possible to employ, for example, a method such as those disclosed in Patent Documents 4 and 5. Although the melting atmosphere is not particularly limited, from the perspective of easily preventing reduction of the titanium oxide powder, it is desirable to perform spheroidization in an environment with a high partial pressure of oxygen, and spheroidization can, for example, be performed in a flame using $LPG/O_2$ gas.

The average circularity of the titanium oxide powder after the spheroidization step (spherical titanium oxide powder) is preferably 0.80 or more and more preferably 0.90 or more. Further, the average particle diameter of the spherical titanium oxide powder may be 0.5-40 $\mu$m and may be 1-30 $\mu$m.

<Step (ii)>

Next, an aluminum source is added to the spherical titanium oxide powder. The step for adding the aluminum source may be a step in which aluminum is unavoidably incorporated during production and may be a step in which an aluminum compound is added. Note that "aluminum unavoidably incorporated" indicates an aluminum source included in the raw material titanium oxide powder. When aluminum is included in the titanium oxide powder, it is preferable to adjust the added amount of the aluminum source so that the aluminum content in the inorganic oxide powder that is ultimately obtained is 20-50,000 mass ppm.

When an aluminum compound is added as the aluminum source, it is possible to use, for example, alumina, aluminum hydroxide, boehmite, aluminum acetate, aluminum nitrate, acetoalcoxyaluminum diisopropylate, metallic aluminum, or the like. Further, the foregoing may be used alone or as a combination of two or more. Thereamong, from the perspective of reducing impurity content, it is preferable to use alumina, aluminum hydroxide, or boehmite.

From the perspective of reaction uniformity, the specific surface area (BET) of the aluminum compound is preferably 5 $m^2/g$ or more. In one embodiment, it is preferable to use an alumina fine powder having a specific surface area of 5-120 $m^2/g$ as the aluminum compound.

Further, as a method for adding the aluminum source, when using a powder to be dissolved in a solvent such as water or alcohol, for example, an aluminum compound such as $Al(CH_3COO)_3$ (aluminum acetate) or acetoalcoxyaluminum diisopropylate, the aluminum source may be added in a state of being dissolved in the solvent such as water or alcohol. However, from the perspectives of mass production and cost, a method in which the aluminum source is added in a powder state is preferable.

After adding the aluminum compound so that the aluminum content in the inorganic oxide powder is 20-50,000 mass ppm, the spherical titanium oxide powder and the aluminum compound are preferably mixed uniformly by using a ball mill or some kind of mixer, etc. Note that from the perspectives of mass production and cost, it is preferable for dry-type mixing to be performed.

<Step (iii)>

Next, a raw material powder comprising the aluminum source and the spherical titanium oxide powder is heat-treated. The heating temperature is preferably 700-1,300 °C and more preferably 800-1,100 °C. By heat-treating the raw material powder at such a heating temperature, it is easier to obtain an inorganic oxide powder that can simultaneously achieve a high dielectric constant and a low dielectric dissipation factor. Further, it is easier to obtain an inorganic oxide powder that has excellent dispersibility in a resin material.

It is possible to use the same heating device as that used in step (i) described above. Further, step (iii) is preferably carried out in atmospheric air. Further, the heating time is preferably 1-24 hours and more preferably 1-12 hours. If the heating time is 1-24 hours, productivity is likely to be good, and further, dielectric properties are also likely to be stable.

By steps (i)-(iii) described above, it is possible to obtain the inorganic oxide powder according to the present embodiment. Note that after step (iii), the obtained inorganic oxide powder may be an aggregate. As such, a disaggregation treatment may be carried out as needed. The disaggregation method is not particularly limited and it is possible to employ, for example, a method in which disaggregation is performed by using an agate mortar, a ball mill, a vibrating mill, a jet mill, a wet jet mill, or the like. Disaggregation may be performed as a dry-type or as a wet-type involving mixing with a liquid such as water or alcohol. In wet-type disaggregation, drying after disaggregation enables an inorganic oxide powder to be obtained. Further, the drying method is not particularly limited and examples thereof include heat-drying, vacuum-drying, freeze-drying, supercritical carbon dioxide drying, and the like.

Further, the method for producing the inorganic oxide powder according to the present embodiment may also comprise a step for classifying the inorganic oxide powder in order to obtain an inorganic oxide powder having a desired average particle diameter. Examples of classification methods include classification by sieve, as well as hydrocyclone and pneumatic classification, etc.

Furthermore, a step for surface-treating the inorganic oxide powder with a surface treatment agent, and a washing step for reducing impurities (for example, the anions described above, etc.) in the inorganic oxide powder, etc., may also be included.

A mixed powder of inorganic oxide powders may be obtained by blending or mixing, in the inorganic oxide powder according to the present embodiment, another powder having a different specific surface area or average particle diameter or another metal powder having a different constitution or the same constitution but a different crystalline phase. By configuring as a mixed powder, it is easier to adjust the dielectric constant, dielectric dissipation factor, thermal expansion coefficient, thermal conductivity, and filling properties, etc., when blended in a resin material. Note that the "powder" may be any kind of powder such as a metal powder, a ceramic powder, a resin powder, etc., and may, for example, be mixed with various kinds of powders such as an amorphous silica powder, a crystalline silica powder, an alumina powder, a titanium oxide powder, a barium titanate powder, a strontium titanate powder, a carbon black powder, an aluminum powder, a silicon powder, a polyethylene powder, a PTFE powder, and the like.

As described above, the inorganic oxide powder according to the present embodiment, when filled in a resin material constituting a substrate, or the like, can simultaneously achieve a high dielectric constant and a low dielectric dissipation factor. The raw material titanium oxide powder ($Ti^{+4}$) of the inorganic oxide powder is easily reduced and is likely to include defects, etc., in the crystals thereof due to changing to $Ti^{+3}$. However, it is thought that by adding the aluminum source and adjusting the aluminum content so as to be within a certain range, the reduction can be suppressed and it becomes easier to achieve a high dielectric constant and a low dielectric dissipation factor.

[Use]

The inorganic oxide powder according to the present embodiment, when filled in a resin material, can simultaneously achieve a high dielectric constant and a low dielectric dissipation factor, and due thereto, can be suitably utilized as a filler for a resin material.

[Resin Composition]

The resin composition according to the present embodiment comprises the inorganic oxide powder described above and at least one resin material selected from a thermoplastic resin and a thermosetting resin.

The content of the inorganic oxide powder in the resin composition is not particularly limited and may be adjusted, as appropriate, according to objectives. For example, when applied in a high-frequency substrate material or an insulating material use, the content of the inorganic oxide powder may be blended in the range of 5-80 mass% and more preferably in the range of 5-70 mass% with respect to the total mass of the resin composition.

<Resin material>

The resin composition according to the present embodiment comprises at least one resin material selected from a thermoplastic resin and a thermosetting resin. More specific examples thereof include: polyethylene resins; polypropylene resins; epoxy resins; silicone resins; phenol resins; melamine resins; urea resins; unsaturated polyester resins; fluorine resins; polyamide-based resins such as polyimide resins, polyamide imide resins, and polyether imide resins; polyester-based resins such as polybutylene terephthalate resins and polyethylene terephthalate resins; polyphenylene sulfide resins; fully aromatic polyester resins; polysulfone resins; liquid crystal polymer resins; polyether sulfone resins; polycarbonate resins; malemide modified resins; ABS resins; AAS (acrylonitrile-acrylic rubber-styrene) resins; and AES (acrylonitrile-ethylene-propylene-diene rubber-styrene) resins. The foregoing may be used alone or as a combination of two or more.

When the resin composition according to the present embodiment is to be used as a high-frequency band substrate material or an insulating material, it is possible to employ a publicly-known low-dielectric resin material that is used in such a use. Specifically, as the low-dielectric resin material, it is possible to use at least one resin material selected from hydrocarbon-based elastomer resins, polyphenylene-ether resins, and aromatic polyene-based resins. Among the foregoing, a hydrocarbon-based elastomer resin or a polyphenylene-ether resin is preferable. The ratio of the foregoing resin materials is preferably 20-95 mass% and more preferably 30-95 mass% with respect to the total mass of the resin composition.

Further, the ratios of the resin material and the inorganic oxide powder in the resin composition can be adjusted, as appropriate, in accordance with targeted dielectric properties such as the dielectric constant and dielectric dissipation factor. For example, the amount of the resin material can be adjusted in the range of 10-10,000 parts by mass with respect to 100 parts by mass of the inorganic oxide powder.

In a range that does not hinder the effects of the present embodiment, the resin composition according to the present embodiment may have a hardening agent, a hardening accelerator, a mold release agent, a coupling agent, a coloring agent, a flame retardant, an ion scavenger, or the like, blended therein.

<Method for producing resin composition>

The method for producing the resin composition is not particularly limited, and the resin composition may be produced by stirring, dissolving, mixing, and dispersing prescribed amounts of each material. The devices used for mixing, stirring, and dispersing the mixture, etc., are not particularly limited, and it is possible to use a motor machine, a three-roller miller, a ball mill, a planetary mixer, etc., provided with a device for stirring and heating. Further, the foregoing devices may be used in combination, as appropriate.

As described above, the resin composition comprising the inorganic oxide powder according to the present embodiment can simultaneously achieve a high dielectric constant and a low dielectric dissipation factor. Further, the resin composition comprising the inorganic oxide powder according to the present embodiment has low viscosity, and therefore, fluidity is good and moldability is also excellent.

**EXAMPLES**

The present invention shall be explained in more detail below by providing examples, but the present invention is not limited by the following descriptions.

[Example 1]

A spherical titanium oxide powder was obtained by spheroidizing a titanium oxide powder 1 (manufactured by Toho Titanium Co., Ltd., product name HT0110, average circularity 0.78, average particle diameter 5.9 $\mu$m) by a flame fusion method. The average circularity of the obtained spherical titanium oxide powder was 0.95. Next, an aluminum source (alumina fine powder (manufactured by Nippon Aerosil Co., Ltd., product name: AEROXIDE® AluC)) was added to the spherical titanium oxide powder to make the aluminum content in the inorganic oxide powder that was finally obtained 40 mass ppm. Thereafter, the raw material powder comprising the alumina fine powder and the spherical titanium oxide powder was put into an alumina crucible and subjected to a heat treatment for four hours in an air atmosphere in an electric furnace having an interior temperature of 900°C. After the heat treatment, the interior of the furnace was allowed to cool naturally to 200°C before the powder was recovered and disaggregated with a mortar to obtain an inorganic oxide powder. The aluminum content, the average circularity, the average particle diameter, and the specific surface area of the obtained inorganic oxide powder were measured using the methods described below. The results are shown in Table 1.

<Method for measuring aluminum content>

Measurements were made in accordance with JIS R 9301-3-4 and JIS 0116.

0.1 g of the inorganic oxide powder was put in a Teflon container, 2 mL of 6M sulfuric acid was added, and the Teflon container was sealed and then heated for 16 hours in a constant temperature dryer adjusted to 230°C. After cooling, the decomposed solution was rendered to a volume of 10 mL with pure water to obtain a test solution. The test solution was diluted with dilute sulfuric acid as needed. Thereafter, a measurement sample was analyzed using ICP optical emission spectroscopy (ICP optical emission spectrometer; manufactured by Agilent Technologies, Inc., product name: 5110 VDV) and the aluminum content in the inorganic oxide powder was measured. The measurement wavelength was set at 396.152 nm. Note that a calibration curve was created using the following reference solutions.

6.0 g of titanium (purity 99.9% or more) was heated and dissolved with 50 mL of 6M hydrochloric acid, and thereafter rendered to 100 mL to prepare a titanium solution. An aluminum reference solution (Al 1000, manufactured by Fujifilm Wako Pure Chemical Corporation) was divided among 10 mL centrifuge tubes so as to obtain 0 mg/L, 0.1 mg/L, 1.0 mg/L, and 10 mg/L, then 2 mL of 6M sulfuric acid and 1 mL of the titanium solution were added and volumes were rendered constant to obtain calibration curve reference solutions.

<Method for measuring average circularity>

After fixing the inorganic oxide powder to a sample stage with carbon tape, an osmium coating was applied. Thereafter, an image with a magnification of 500-50,000 and a resolution of $1280 \times 1024$ pixels captured by a scanning electron microscope (manufactured by JEOL Ltd., product name: JSM-7001F SHL) was imported to a computer. A projected area (S) and a projected perimeter (L) of a particle constituting the powder were calculated for the image using an image analysis device (manufactured by Nippon Roper K. K., product name: Image-Pro Premier Ver. 9.3) and the circularity of the particle was calculated from formula (1) below. Circularities were calculated for 200 arbitrary particles and the average value thereof was used as the average circularity of the inorganic oxide powder.

$$\text{Circularity} = 4\pi S/L^2 \qquad (1)$$

<Method for measuring average particle diameter>

Average particle diameter was measured by using a laser diffraction particle size distribution measuring device (manufactured by Beckman Coulter, product name: LS 13 320). First, 50 $cm^3$ of pure water and 0.1 g of the inorganic oxide powder were put in a glass beaker and subjected to a dispersion treatment for one minute with an ultrasonic homogenizer (manufactured by BRANSON, product name: SFX 250). The dispersed solution of the inorganic oxide powder that was subjected to the dispersion treatment was added using a pipette one drop at a time to the laser diffraction particle size distribution measuring device, and measurement was performed 30 seconds after a prescribed amount had been added. A particle size distribution was calculated from light intensity distribution data of diffracted/scattered light of the inorganic oxide powder detected by a sensor inside the laser diffraction particle size distribution measuring device. The average particle diameter was calculated from a particle diameter corresponding to a cumulative value of 50% in a volume-based cumulative particle size distribution of measured particle diameters.

<Method for measuring specific surface area>

1 g of the inorganic oxide powder was filled in a measurement cell and the specific surface area was measured (single point BET method) by using a Macsorb HM model-1201, a fully automated specific surface area and diameter measuring device manufactured by Mountech Co., Ltd. Pre-measurement degassification conditions were set as 200°C for ten minutes. Further, nitrogen was used as the adsorption gas.

Further, the ratio of the rutile phase in the obtained inorganic oxide powder was measured using the method described below. The results are shown in Table 1.

<Method for identifying and measuring content of crystalline phases in inorganic oxide powder>

Using a sample horizontal-type multipurpose X-ray diffraction device (manufactured by Rigaku Corporation, product name: RINT-Ultimal IV) as a measurement device, an X-ray diffraction pattern of the inorganic oxide powder was measured under the following measurement conditions.

| | |
|---|---|
| X-ray source: | CuKα |
| Tube voltage: | 40 kV |
| Tube current: | 40 mA |
| Scanning speed: | 10.0°/min |
| 2θ scanning range: | 10°-80° |

Further, Rietveld method software (manufactured by MDI, product name: integrated powder X-ray software Jade+9.6) was used in quantitative analysis of crystalline phases. Note that X-ray diffraction measurement was performed on a sample obtained by adding α-alumina (internal reference substance) (manufactured by NIST), which is a reference sample for X-ray diffraction, to the inorganic oxide powder such that the content of the α-alumina was 50 mass% (based on the total weight of the inorganic oxide powder sample after the addition), and the ratio (mass%) of each kind of crystalline phase was calculated by Rietveld analysis.

The dielectric properties when the obtained inorganic oxide powder was filled in a resin material were evaluated using the methods described below.

<Evaluation of dielectric properties (dielectric constant and dielectric dissipation factor)>

The inorganic oxide powder and a polyethylene resin powder (manufactured by Sumitomo Seika Chemicals co., Ltd., product name: Flo-thene® UF-20S) were weighed so that the filled content of the inorganic oxide powder was 20 vol.% and mixed using a vibration mixer (manufactured by Resodyn Corporation) with an acceleration rate of 60G and a processing time of two minutes to obtain a resin composition. The obtained resin composition was loaded, at an amount such that the thickness thereof was approximately 0.3 mm, into a metal frame with a diameter of 3 cm and was rendered into a sheet by a nanoimprinting device (manufactured by SCIVAX Corporation, product name X-300) under conditions of 30,000 N and 140°C for five minutes. The obtained sheet was cut into 1.5 cm × 1.5 cm sizes to obtain evaluation samples.

Next, a 36 GHz cavity resonator (manufactured by Samtech. Co., Ltd.) was connected to a vector network analyzer (manufactured by Keysight Technologies, product name: 85107), an evaluation sample was arranged so as to cover a 10 mm-diameter hole provided in the cavity resonator, and a resonance frequency (f0) and an unloaded Q value (Qu) were measured. The same measurement was repeated five times with the evaluation sample being rotated 60 degrees after each measurement. Average values of the obtained f0 and Qu values were used as measured values and analytical software (software manufactured by Samtech. Co., Ltd.) was used to calculate the dielectric constant from f0 and the dielectric dissipation factor (tan $\delta$c) from Qu. Note that measurements were carried out in conditions with a measurement temperature of 20°C and a humidity of 60%RH. The obtained dielectric constant and dielectric dissipation factor values were evaluated using the evaluation criteria described below. The results are shown in Table 1.

(Evaluation criteria)

<Dielectric constant>

3 points: dielectric constant is 4.8 or more
2 points: dielectric constant is 4.5 or more and less than 4.8
1 point: dielectric constant is 4.4 or more and less than 4.5
0 points: dielectric constant is less than 4.4

<Dielectric dissipation factor>

3 points: dielectric dissipation factor is $4.6 \times 10^{-4}$ or less
2 points: dielectric dissipation factor is more than $4.6 \times 10^{-4}$ and less than $5.1 \times 10^{-4}$
1 point: dielectric dissipation factor is $5.1 \times 10^{-4}$ or more and less than $5.6 \times 10{-4}$
0 points: dielectric dissipation factor is $5.6 \times 10^{-4}$ or more

<Overall evaluation>

The scores for the dielectric constant and dielectric dissipation factor were totaled and the dielectric properties were evaluated in accordance with the criteria described below.

Excellent: the scores for the dielectric constant and the dielectric dissipation factor are both 3 points (6 points in total).

Good: one of the dielectric constant or the dielectric dissipation factor is 3 points and the other is 2 points (5 points in total).

Pass: the scores for the dielectric constant and the dielectric dissipation factor are both 2 points (4 points in total).

Fail: one of the dielectric constant or the dielectric dissipation factor is less than 2 points (4 points or less in total).

[Examples 2-7 and Comparative Examples 1-3]

Inorganic oxide powders were prepared using the constitutions and production conditions shown in Table 1. Note that Comparative Examples 2 and 3 are examples in which inorganic oxide powders were prepared without performing step (i). The aluminum content, the average circularity, the average particle diameter, the specific surface area, the ratio of the rutile phase, and the dielectric properties of each of the inorganic oxide powders were evaluated using the same methods as for Example 1. The results are shown in Table 1.

[Example 8]

As a surface-treatment agent, 1 part by mass of hexamethyldisilazane (manufactured by Shin-Etsu Silicone Co., Ltd., product name: KBM-1003) was added to 100 parts by mass of the inorganic oxide powder obtained in Example 1. Then, after mixing for two minutes with an acceleration rate of 60G in a vibration mixer (manufactured by Resodyn Corporation, product name: LabRAM II), drying was performed for 24 hours at 120°C in an environment of less than -133 Pa using a mixed powder vacuum dryer to obtain a surface-treated inorganic oxide powder. The aluminum content, the average circularity, the average particle diameter, the specific surface area, the ratio of the rutile phase, and the dielectric properties of the obtained the inorganic oxide powder were evaluated using the same methods as for Example 1. The results are shown in Table 1.

Note that the raw materials used in the examples and comparative examples are as follows.

<Raw material titanium oxide powder>

Titanium oxide powder 1: manufactured by Toho Titanium Co., Ltd., product name HT0110, average circularity 0.78, average particle diameter 5.9 $\mu$m Titanium oxide powder 2: manufactured by Toho Titanium Co., Ltd., product name HT0514, average circularity 0.72, average particle diameter 0.4 $\mu$m

<Aluminum source>

Alumina: alumina fine powder (Nippon Aerosil Co., Ltd., product name: AEROXIDE AluC, specific surface area: 100 m$^2$/g)

**Table 1**

| | | | EX.1 | EX.2 | EX.3 | EX.4 | EX.5 | EX.6 | EX.7 | EX.8 | COMP. EX.1 | COMP. EX.2 | COMP. EX.3 |
|---|---|---|---|---|---|---|---|---|---|---|---|---|---|
| INORGANIC METAL OXIDE POWDER | ALUMINUM CONTENT | (mass ppm) | 400 | 2,500 | 25,000 | 40,000 | 2,500 | 20 | 2,500 | 2,500 | 60,000 | 6 | 8 |
| | AVERAGE CIRCULARITY | (-) | 0.95 | 0.94 | 0.92 | 0.88 | 0.96 | 0.96 | 0.94 | 0.94 | 0.90 | 0.78 | 0.72 |
| | AVERAGE PARTICLE DIAMETER | ($\mu$m) | 4.2 | 4.2 | 3.8 | 5.1 | 1.1 | 3.9 | 4.2 | 4.4 | 5.8 | 5.9 | 0.4 |
| | SPECIFIC SURFACE AREA | (m2/g) | 1.0 | 1.0 | 1.2 | 1.1 | 2.6 | 1.2 | 1.1 | 1.1 | 1.1 | 1.9 | 6.3 |
| | RATIO OF RUTILE PHASE | (mass%) | 100 | 100 | 96 | 92 | 100 | 100 | 72 | 100 | 89 | 97 | 99 |
| PRODUCTION CONDITIONS | STEP (i) — RAW MATERIAL TITANIUM OXIDE POWDER | (-) | TITANIUM OXIDE POWDER 1 | | | | | | | | TITANIUM OXIDE POWDER 1 | | TITANIUM OXIDE POWDER 2 |
| | STEP (i) — SPHEROIDIZATION METHOD | (-) | FLAME FUSION | | | | | | | | FLAME FUSION | NONE | NONE |
| | STEP (ii) — ALUMINUM SOURCE | (-) | ALUMINA | | | | | | | | ALUMINA | | |
| | STEP (iii) — HEATING TEMPERATURE | (°C) | 900 | 900 | 1,000 | 1,000 | 800 | 900 | 800 | 900 | 1,000 | N/A | N/A |
| | STEP (iii) — HEATING TIME | (hours) | 4 | 4 | 4 | 4 | 8 | 4 | 3 | 4 | 4 | N/A | N/A |
| | OTHER — SURFACE TREATMENT (Y/N) | (-) | N | N | N | N | N | N | N | Y | N | N | N |

EP 4 353 685 A1

12

(continued)

| | | | EX.1 | EX.2 | EX.3 | EX.4 | EX.5 | EX.6 | EX.7 | EX.8 | COMP. EX.1 | COMP. EX.2 | COMP. EX.3 |
|---|---|---|---|---|---|---|---|---|---|---|---|---|---|
| EVALUATION RESULTS | DIELECTRIC CONSTANT OF RESIN COMPOSITION | (-) | 4.8 | 4.9 | 4.7 | 4.6 | 4.8 | 4.7 | 4.6 | 4.8 | 4.4 | 5.4 | 5.1 |
| | DIELECTRIC CONSTANT EVALUATION RESULT | (points) | 3 | 3 | 2 | 2 | 3 | 2 | 2 | 3 | 1 | 3 | 3 |
| | DIELECTRIC DISSIPATION FACTOR OF RESIN COMPOSITION | (-) | $4.5 \times 10^4$ | $4.3 \times 10^4$ | $4.2 \times 10^4$ | $4.4 \times 10^4$ | $4.4 \times 10^4$ | $4.6 \times 10^4$ | $4.8 \times 10^4$ | $4.2 \times 10^4$ | $4.7 \times 10^4$ | $8.2 \times 10^4$ | $8.8 \times 10^4$ |
| | DIELECTRIC DISSIPATION FACTOR EVALUATION RESULT | (points) | 3 | 3 | 3 | 3 | 3 | 3 | 2 | 3 | 2 | 0 | 0 |
| | OVERALL EVALUATION | (points) | 6 | 6 | 5 | 5 | 6 | 5 | 4 | 6 | 3 | 3 | 3 |
| | | (-) | EXCEL-LENT | EXCEL-LENT | GOOD | GOOD | EXCEL-LENT | GOOD | PASS | EXCEL-LENT | FAIL | FAIL | FAIL |

As shown in Table 1, with the inorganic oxide powders of Examples 1-8 which satisfy the configuration of the present invention, it was possible to obtain a resin composition having a high dielectric constant and a low dielectric dissipation factor. Meanwhile, in Comparative Examples 1-3 which do not satisfy the configuration of the present invention, either the dielectric constant or the dielectric dissipation factor of the obtained resin compositions was poor. From the above results, it could be confirmed that the inorganic oxide powder according to the present invention, when filled in a resin material, can simultaneously achieve a high dielectric constant and a low dielectric dissipation factor.

## INDUSTRIAL APPLICABILITY

The inorganic oxide powder according to the present embodiment, when filled in a resin material, can simultaneously achieve a high dielectric constant and a low dielectric dissipation factor. Due thereto, the inorganic oxide powder according to the present embodiment can be suitably used as a filler for a resin material. Further, a resin composition comprising the inorganic oxide powder according to the present embodiment is industrially applicable in a use as a high-frequency substrate material or an insulating material, etc.

## Claims

1. An inorganic oxide powder comprising a spherical titanium oxide powder and an aluminum oxide powder, wherein the aluminum content in the inorganic oxide powder is 20-50,000 mass ppm.

2. The inorganic oxide powder according to claim 1, wherein the inorganic oxide powder has an average circularity of 0.80 or more.

3. The inorganic oxide powder according to claim 1 or 2, wherein the inorganic oxide powder has an average particle diameter of 0.5-40 $\mu$m.

4. The inorganic oxide powder according to claim 1 or 2, wherein the inorganic oxide powder has a specific surface area of 5 $m^2$/g or less.

5. The inorganic oxide powder according to claim 1 or 2, wherein the ratio of the spherical titanium oxide powder is 90 mass% or more with respect to the total mass of the inorganic oxide powder.

6. The inorganic oxide powder according to claim 1 or 2, wherein the inorganic oxide powder is surface-treated with a surface treatment agent.

7. The inorganic oxide powder according to claim 1 or 2, wherein the inorganic oxide powder is for a resin material filler.

8. A resin composition comprising:

   the inorganic oxide powder according to claim 1 or 2; and
   at least one resin material selected from a thermoplastic resin and a thermosetting resin.

9. A method for producing the inorganic oxide powder according to claim 1 or 2, wherein the method comprises:

   spheroidizing a titanium oxide powder by a powder melting method;
   adding an aluminum source to the spheroidized titanium oxide powder; and
   heat-treating a raw material powder comprising the aluminum source and the spherical titanium oxide powder.

## INTERNATIONAL SEARCH REPORT

| International application No. |
|---|
| **PCT/JP2022/020633** |

| **A.** | **CLASSIFICATION OF SUBJECT MATTER** |
|---|---|

*C01G 23/047*(2006.01)i; *C08K 3/22*(2006.01)i; *C08L 101/00*(2006.01)i; *H01B 3/12*(2006.01)i
FI: C01G23/047; C08K3/22; C08L101/00; H01B3/12 304; H01B3/12 337

According to International Patent Classification (IPC) or to both national classification and IPC

| **B.** | **FIELDS SEARCHED** |
|---|---|

Minimum documentation searched (classification system followed by classification symbols)

C01G23/047; C08K3/22; C08L101/00; H01B3/12

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

| **C.** | **DOCUMENTS CONSIDERED TO BE RELEVANT** |
|---|---|

| Category* | Citation of document, with indication, where appropriate, of the relevant passages | Relevant to claim No. |
|---|---|---|
| X | CN 112678867 A (SUZHOU GINET NEW MATERIAL TECHNOLOGY CO., LTD.) 20 April 2021 (2021-04-20)<br>claims, paragraph [0001], examples 1-2, comparative examples 9-10, 17-18, fig. 1-3, 13-18, 25-30 | 1-5, 7-8 |
| Y | | 6 |
| A | | 9 |
| X | JP 2006-126468 A (ISHIHARA SANGYO KAISHA, LTD.) 18 May 2006 (2006-05-18)<br>paragraphs [0030]-[0037], comparative example 1 | 1-3, 5-8 |
| Y | claims, paragraph [0018] | 1-2, 5-9 |
| A | | 4 |
| X | JP 2003-277057 A (SHOWA DENKO KK) 02 October 2003 (2003-10-02)<br>claims, paragraph [0039] | 1-3, 5, 7-8 |
| Y | paragraph [0030] | 1-2, 5-8 |
| A | | 4, 9 |

☑ Further documents are listed in the continuation of Box C.  ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **28 June 2022** | **05 July 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

## INTERNATIONAL SEARCH REPORT

| | International application No. |
|---|---|
| | **PCT/JP2022/020633** |

### C. DOCUMENTS CONSIDERED TO BE RELEVANT

| Category* | Citation of document, with indication, where appropriate, of the relevant passages | Relevant to claim No. |
|---|---|---|
| Y | CN 107055606 A (JILIN UNIVERSITY) 18 August 2017 (2017-08-18) paragraph [0002], examples 1-2, fig. 2-3 | 1-2, 5-9 |
| A | | 3-4 |
| Y | WO 2004/052786 A1 (TAYCA CORPORATION) 24 June 2004 (2004-06-24) claims, page 4, lines 23-25, page 5, line 40 to page 6, line 38 | 1-2, 5-8 |
| A | | 3-4, 9 |
| A | JP 2012-246203 A (HITACHI METALS, LTD.) 13 December 2012 (2012-12-13) abstract | 9 |

Form PCT/ISA/210 (second sheet) (January 2015)

INTERNATIONAL SEARCH REPORT

Information on patent family members

International application No.

**PCT/JP2022/020633**

| Patent document cited in search report | | | Publication date (day/month/year) | Patent family member(s) | | | Publication date (day/month/year) |
|---|---|---|---|---|---|---|---|
| CN | 112678867 | A | 20 April 2021 | (Family: none) | | | |
| JP | 2006-126468 | A | 18 May 2006 | (Family: none) | | | |
| JP | 2003-277057 | A | 02 October 2003 | US claims, paragraphs [0060], [0069] WO KR | 2006/0074173 2003/078327 10-2005-0013533 | A1 A1 A | |
| CN | 107055606 | A | 18 August 2017 | (Family: none) | | | |
| WO | 2004/052786 | A1 | 24 June 2004 | US claims, paragraphs [0015], [0029]-[0033] EP CN KR | 2006/0204456 1580166 1723174 10-2005-0084073 | A1 A1 A A | |
| JP | 2012-246203 | A | 13 December 2012 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2021027386 A
- JP H6340423 A
- JP 2005053707 A

- JP 4155750 B
- JP 2012246203 A

**Non-patent literature cited in the description**

- International Materials Reviews. *Supplementary data,* 2015, vol. 60 (70